# EUROPEAN PATENT SPECIFICATION

(11) **EP 4 020 667 B1**
(45) Date of publication and mention of the grant of the patent: **16.09.2026**
(21) Application number: 21207752.3
(22) Date of filing: 11.11.2021
(51) Int. Cl.: H01M 10/617, H01M 10/625, H01M 10/6563, H01M 10/6568, B60K 11/06, B60L 58/26, B60L 50/60, B60L 50/64, B60K 1/04, H01M 50/204, H01M 50/249

(54) **VEHICLE BATTERY PACK**
FAHRZEUGBATTERIEPACK
BLOC-BATTERIE DE VÉHICULE

(30) Priority: 28.12.2020 JP 2020218221
(43) Date of publication of application: 29.06.2022
(73) Proprietor: Suzuki Motor Corporation, Shizuoka 432-8611 (JP)
(72) Inventor: Mizutori, Masaki, Hamamatsu-shi, 432-8611 (JP); Watanabe, Koichiro, Hamamatsu-shi, 432-8611 (JP)
(74) Representative: Henkel & Partner mbB

(56) References cited:
- EP-A1- 3 343 670
- WO-A1-2009/128214
- WO-A1-2015/063560
- JP-A- 2010 198 971
- US-A1- 2014 023 905

## Description

### [Technical Field]

The present invention relates to a vehicle battery pack that has multiple battery modules, a cooling device configured to cool the multiple battery modules, and a battery case for accommodating the multiple battery modules and the cooling device.

### [Background Art]

In a vehicle such as an electric automobile, a vehicle battery pack may be mounted to electrically drive the vehicle, for example. Typically, a vehicle battery pack has multiple battery modules disposed therein, a battery cooling device capable of cooling the multiple battery modules, and a battery case for accommodating the multiple battery modules and the cooling device. Furthermore, the cooling device may be configured to cool the multiple battery modules using air sent from a blower. The cooling device is required to send the air from the blower efficiently to cool the multiple battery modules efficiently.

Examples of such a vehicle battery pack include a battery pack that has: a battery (battery module); a battery case for accommodating the battery; a cooling unit (cooling device) that is provided on one end side in the longitudinal direction of the battery case and supplies cooling air to the battery case; and an air duct formed so as to allow passage of the cooling air, in which: the air duct has a main air duct provided in a central portion in the transverse direction of the battery case along the longitudinal direction of the battery case, and multiple distribution ducts that are connected to the other end portion of the main air duct located on the other end side in the longitudinal direction of the battery case to distribute cooling air in a direction intersecting the main air duct; and cooling air supplied from the cooling unit vertically circulates inside of the battery case through the air duct and returns to the cooling unit (see JP 2011-116 321 A, for example).

EP 3 343 670 A1 discloses a battery pack in which a plurality of battery modules, a cooling device having a fan, and a duct panel are arranged inside a case, and introduction holes are positioned above some of intervals each provided between adjacent ones of the battery modules that are arranged side by side in the vehicle width direction.

Further battery packs with cooling structures are disclosed in US 2014/023905 A1, WO 2009/128214 A1, WO 2015/063560 A1, and JP 2010 198971 A.

### [Summary of Invention]

### [Problem to be Solved by the Invention]

However, in the example of the vehicle battery pack as described above, the cooling air is sent from one end side to the other end side in the longitudinal direction of the battery case through the main air duct, and is then returned from the other end side to the one end side in the longitudinal direction of the battery case so as to cool the multiple battery modules located along the multiple distribution ducts.

In such a vehicle battery pack, air is warmed by multiple battery modules while passing through multiple distribution ducts and returns to the one end side from the other end side in the longitudinal direction of the battery case. For this reason, the battery modules located on the one end side in the longitudinal direction of the battery case are less likely to be cooled than the battery modules located on the other end side in the longitudinal direction of the battery case. That is, multiple battery modules cannot be cooled efficiently.

With this being the case, a vehicle battery pack is required to cool multiple battery modules efficiently.

### [Means for Solving the Problem]

To solve the problem, the invention provides a vehicle battery pack mounted on a vehicle as defined by claim 1.

### [Advantageous Effect of Invention]

With the vehicle battery pack according to the invention, multiple battery modules can be cooled efficiently.

### [Brief Description of Drawings]

[Figure 1] Figure 1 is a plan view schematically illustrating a bottom portion of a vehicle body including a battery pack having a cooling device according to an embodiment.
[Figure 2] Figure 2 is a plan view schematically illustrating the bottom portion of the vehicle body according to the embodiment with a transparent floor panel.
[Figure 3] Figure 3 is a plan view schematically illustrating the battery pack according to the embodiment with its upper case removed.
[Figure 4] Figure 4 is an enlarged view of part W of Figure 3.
[Figure 5] Figure 5 is a cross-sectional view taken along line X-X of Figure 4.
[Figure 6] Figure 6 is a cross-sectional view taken along line Y-Y of Figure 2.
[Figure 7] Figure 7 is a cross-sectional view taken along line Z-Z of Figure 2.

### [Mode for Carrying Out the Invention]

A vehicle battery pack according to an embodiment will be described together with a vehicle in which the vehicle battery pack is mounted. The vehicle on which the vehicle battery pack according to the present embodiment (hereinafter simply referred to as "battery pack" as necessary) is mounted in an electric automobile. However, the vehicle may be an electrically powered vehicle other than an electric automobile in which a battery pack can be mounted.

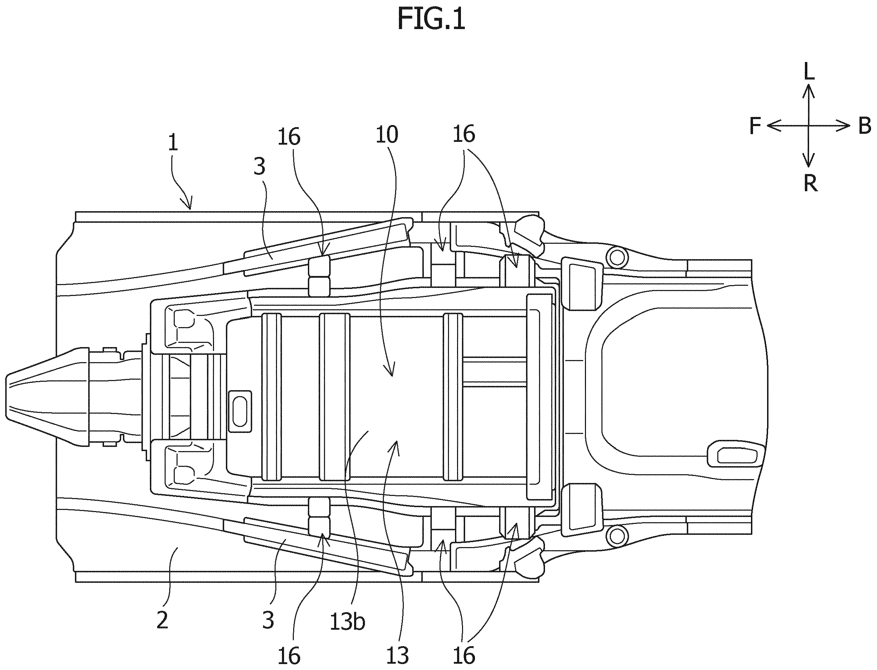

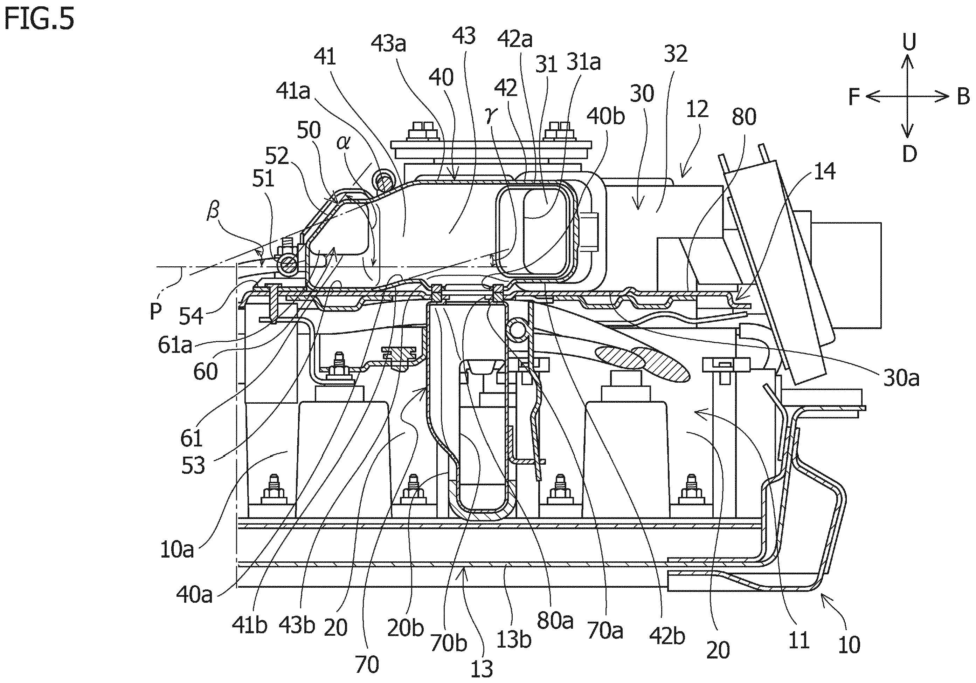

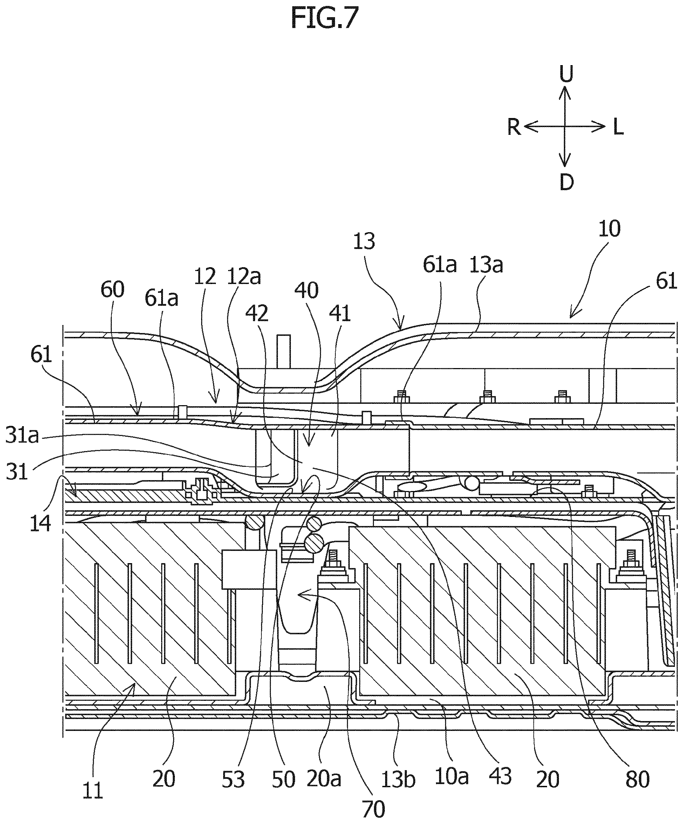

In the drawings used in the description of the present specification, directions based on the vehicle are indicated in the following manner. In Figures 1 to 6, the vehicle front and the vehicle back are indicated by one-headed arrow F and one-headed arrow B, respectively. In Figures 1 to 4 and 7, the left and right when facing the vehicle front are indicated by one-headed arrow L and one-headed arrow R, respectively. The vehicle width directions are indicated by one-headed arrow L and one-headed arrow R. Furthermore, in Figures 5 to 7, the upper side of the vehicle and the lower side of the vehicle are indicated by one-headed arrow U and one-headed arrow D, respectively.

Note that the left and right respectively refer to the left and right when facing the vehicle front. The horizontal direction refers to directions extending along the longitudinal direction and the width direction of the vehicle. In some cases, the upper side of the vehicle and the lower side of the vehicle may simply be referred to as the upper side and the lower side, respectively.

### "Overview of battery pack and vehicle"

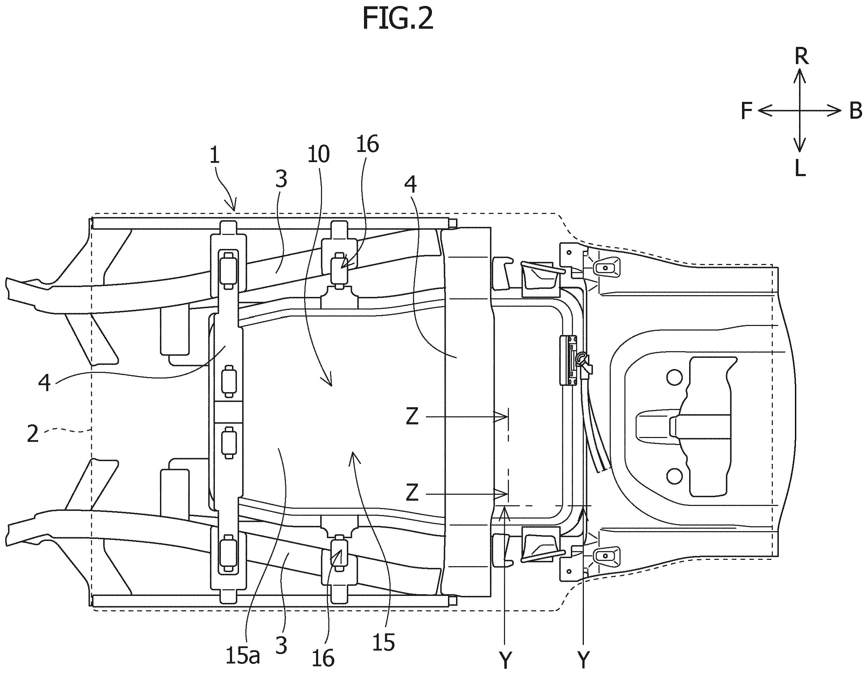

An overview of a battery pack 10 and a vehicle according to the present embodiment will be provided with reference to Figures 1 to 7. That is, the battery pack 10 and the vehicle according to the present embodiment are generally configured in the following manner. As illustrated in Figures 1 and 2, the battery pack 10 is mounted on the vehicle.

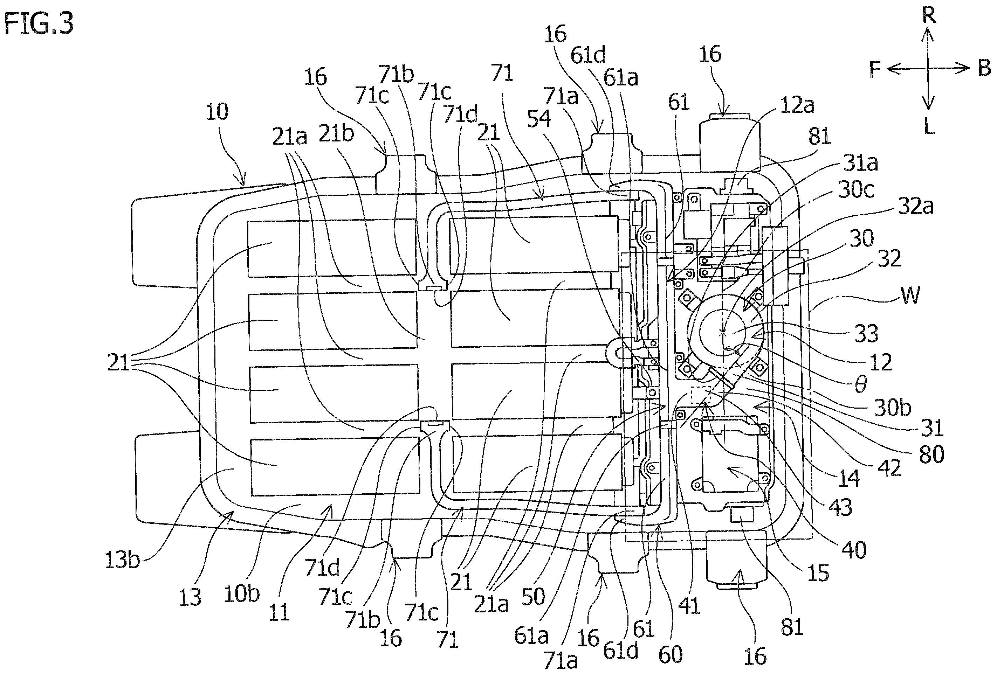

As illustrated in Figures 3 to 7, the battery pack 10 has a battery module group 11 including multiple battery modules 20, 21. The battery pack 10 has a cooling device 12 configured to cool the multiple battery modules 20, 21.

Referring to Figures 3 to 7, the cooling device 12 has a blower 30 as a supply source of air sent to cool the multiple battery modules 20, 21. The cooling device 12 has a duct assembly 12a that has an internal space formed so as to allow passage of air from the blower 30. Referring to Figures 1 to 7, the battery pack 10 has a battery case 13 for accommodating the battery module group 11 and the cooling device 12.

The duct assembly 12a has a first duct 40 connected to the blower 30. The duct assembly 12a has an intersecting connection duct 50 connected to the first duct 40. The duct assembly 12a has a second duct 60 connected to the intersecting connection duct 50. The first duct 40 and the intersecting connection duct 50 are disposed along the horizontal direction. The second duct 60 has multiple second duct bodies 61 extending from the intersecting connection duct 50 so as to split the air having passed through the intersecting connection duct 50 from the first duct 40.

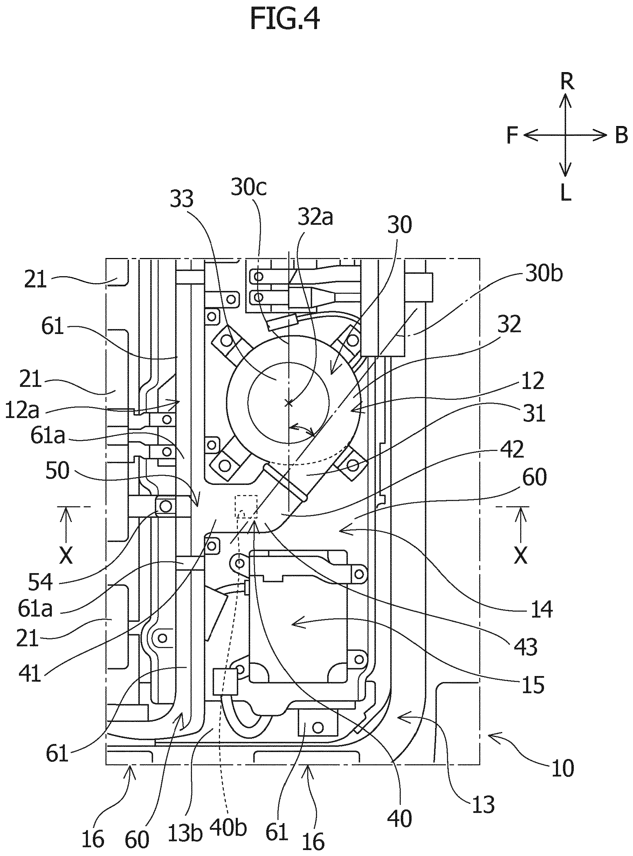

As illustrated in Figures 5 to 7, the battery module group 11 has multiple first battery modules 20 disposed in an area (hereinafter referred to as "first battery area" as needed) 10a located below the first duct 40 so as to vertically face the first duct 40. As illustrated in Figures 3 and 4, the battery module group 11 has multiple second battery modules 21 disposed so as to be shifted in at least one direction of the horizontal directions from the multiple first battery modules 20.

As illustrated in Figure 5, the first duct 40 has a through hole 40b that penetrates a bottom wall 40a of the first duct 40 so as to connect gaps 20a, 20b between at least one set of adjacent first battery modules 20 with the first duct 40 to supply air to the gaps 20a, 20b from the first duct 40. As illustrated in Figure 3, the multiple second duct bodies 61 are configured to send air toward the multiple second battery modules 21 through the multiple second duct bodies 61.

Furthermore, the battery pack 10 and the vehicle according to the present embodiment can be generally configured in the following manner. Referring to Figures 5 to 7, the cross section of the internal space of the second duct body 61 is smaller than the cross section of the internal space of the first duct 40. Referring to Figures 4 and 5, the cross section of the internal space of the first duct 40 decreases as the cross section approaches the intersecting connection duct 50 in a direction from the blower 30 toward the intersecting connection duct 50.

As illustrated in Figures 3 and 4, the first duct 40 has a downstream end portion 41 in the flow direction of air passing therethrough. The downstream end portion 41 of the first duct 40 is connected to the intersecting connection duct 50. The downstream end portion 41 of the first duct 40 is formed such that, in plan view, the width of the downstream end portion 41 increases toward the intersecting connection duct 50 in the direction from the blower 30 toward the intersecting connection duct 50.

Referring to Figures 3 to 7, the blower 30, the first duct 40, the intersecting connection duct 50, and the second duct 60 are located above the multiple first battery modules 20 so as to vertically face the multiple first battery modules 20. As illustrated in Figures 3 to 5, the blower 30 has a connection portion 31 connected to an upstream end portion 42 in the flow direction of the first duct 40. The connection portion 31 of the blower 30 has an air outlet 31a opened in one direction of the horizontal directions to send air into the internal space of the first duct 40.

Referring to Figures 3 to 7, the multiple second duct bodies 61 include two second duct bodies 61 extending in one and the other specific horizontal directions from the intersecting connection duct 50. The second duct 60 is located closer to one side in a direction substantially orthogonal to the specific direction than the blower 30. The downstream end portion 41 of the first duct 40 extends in the direction substantially orthogonal to the specific direction.

Here, the specific direction is the width direction. The direction substantially orthogonal to the specific direction is the longitudinal direction. One side in the direction substantially orthogonal to the specific direction is the front. However, the specific direction may be a horizontal direction other than the width direction. For example, the specific direction may be the longitudinal direction. The one side in the direction substantially orthogonal to the specific direction may be the back.

As illustrated in Figures 3 and 4, the connection portion 31 of the blower 30 is disposed so as to be shifted with respect to the downstream end portion 41 of the first duct 40 in the specific direction (width direction in particular). The first duct 40 has a tilted portion 43 located between the upstream and downstream end portions 42, 41 in the flow direction thereof. The tilted portion 43 is tilted in the specific direction so as to separate from the blower 30, from the other to one side in the direction substantially orthogonal to the specific direction, particularly from the back toward the front.

### "Details of vehicle"

Referring to Figures 1 and 2, specifically, the vehicle can be configured in the following manner. A vehicle body 1 has a floor panel 2 that forms a floor (not illustrated) inside the vehicle. The battery pack 10 is disposed below the floor panel 2.

The vehicle body 1 also has two side members 3 spaced apart from each other in the width direction. Each side member 3 has an elongated shape. Each side member 3 is disposed along the longitudinal direction. The battery pack 10 is located between the two side members 3 in plan view. The two side members 3 are located below the floor panel 2. An upper surface of each side member 3 is joined to a lower surface of the floor panel 2.

As illustrated in Figure 2, the vehicle body 1 has a cross member 4 that extends in the width direction so as to connect the two side members 3. The cross member 4 is located above the battery pack 10. The cross member 4 also extends so as to cross the battery pack 10 in plan view. In Figure 2, the vehicle body 1 has two cross members 4. However, the vehicle body may have one, three, or more cross members.

### "Details of battery pack"

Referring to Figures 1 to 7, specifically, the battery pack 10 can be configured in the following manner. Referring to Figures 3 to 7, the battery pack 10 has a support base 14 configured to support the cooling device 12 from below.

The support base 14 has a placement portion 80 on which the cooling device 12 is placed. In particular, the blower 30 of the cooling device 12, the first duct 40, the intersecting connection duct 50, and the second duct 60 are placed on the placement portion 80. The first battery area 10a is an area 10a covered with the placement portion 80 from above. Specifically, an upper end surface of the first battery area 10a can be defined by the placement portion 80. The support base 14 also has a leg portion 81 that supports the placement portion 80. As illustrated in Figure 5, a through hole 80a vertically penetrates the placement portion 80.

Referring to Figures 3 to 6, the battery pack 10 further has an electric device 15 placed on the placement portion 80. The electric device 15 is located in the vicinity of the first duct 40. As illustrated in Figures 3 and 4, the electric device 15 is spaced apart from the blower 30 in the specific direction (width direction in particular) on the placement portion 80. The electric device 15 may be a battery controller 15 that can control charging, discharging, and other operations of the multiple battery modules 20, 21. However, the electric device is not limited to a battery controller. For example, the electric device may be an inverter or the like.

Referring to Figures 3 to 7, the battery case 13 accommodates the support base 14 and the electric device 15 in addition to the battery module group 11 and the cooling device 12. Referring to Figures 1 to 7, the battery case 13 has an upper case 13a that forms an upper portion thereof. The battery case 13 also has a lower case 13b that forms a lower portion thereof.

The battery case 13 may be configured of metal. In this case, the upper and lower cases 13a, 13b of the battery case 13 may be formed as a press-formed part including metal plate materials. However, the battery case may be configured of resin. In this case, at least one of the upper and lower cases of the battery case may be formed as a resin-formed part.

As illustrated in Figures 1 and 2, the battery pack 10 is configured to be attached to the two side members 3. The battery pack 10 has multiple attachment mechanisms 16 configured to attach the battery pack 10 to each side member 3. In other words, the battery pack 10 has the multiple attachment mechanisms 16 configured to attach the battery case 13 to the vehicle body 1. However, the battery pack may have a single attachment mechanism configured to attach the battery pack to each side member.

### "Details of battery module"

Referring to Figures 3 to 7, specifically, the battery module group 11 can be configured in the following manner. The battery modules 20, 21 of the battery module group 11 enable charging and discharging of electric power used as electric power for driving the vehicle. The multiple battery modules 20, 21 are spaced apart from one another in the horizontal direction.

Referring to Figures 5 to 7, the multiple first battery modules 20 are arranged in a matrix including multiple rows and multiple columns in the first battery area 10a. The multiple rows extend along the specific direction (width direction in particular). The multiple columns extend along the direction (longitudinal direction in particular) substantially orthogonal to the specific direction. For example, as illustrated in Figures 5 to 7, four first battery modules 20 may be arranged in a matrix of two rows and two columns. However, the arrangement of the multiple first battery modules is not limited to the above. For example, the multiple first battery modules may be arranged in one line.

In a case in which the multiple first battery modules 20 are arranged in a matrix, in the first battery area 10a, the gap 20a is formed between at least two sets of first battery modules 20 adjacent to each other in the specific direction (width direction in particular), and the gap 20b is formed between at least two sets of first battery modules 20 adjacent to each other in the direction (longitudinal direction in particular) substantially orthogonal to the specific direction. The multiple first battery modules 20 are arranged so as to connect all of the gaps 20a, 20b in the first battery area 10a.

As illustrated in Figure 3, a space is formed between the upper case 13a and the multiple second battery modules 21 in the vertical direction. The multiple second battery modules 21 are arranged in a matrix including multiple rows and multiple columns, in an area (hereinafter referred to as "second battery area" as necessary) 10b shifted in one horizontal direction from the first battery area 10a.

**In** particular, the second battery area 10b is shifted in a direction (longitudinal direction in particular) substantially orthogonal to the specific direction from the first battery area 10a. Furthermore, the second battery area 10b may be shifted to one side (front in particular) in the direction substantially orthogonal to the specific direction from the first battery area 10a. However, the arrangement relationship between the first and second battery areas is not limited to this example. For example, the second battery area may be shifted in the specific direction (width direction in particular) from the first battery area.

The multiple second battery modules 21 are arranged in a matrix including multiple rows and multiple columns in the second battery area 10b. The multiple rows are arranged along the specific direction (width direction in particular). The multiple columns are arranged along the direction (longitudinal direction in particular) substantially orthogonal to the specific direction. For example, as illustrated in Figure 3, eight second battery modules 21 may be arranged in a matrix of two rows and four columns. However, the arrangement of the multiple second battery modules is not limited to the above. For example, the multiple second battery modules may be arranged in one line.

In a case in which the multiple second battery modules 21 are arranged in a matrix, in the second battery area 10b, a gap 21a is formed between at least two sets of second battery modules 21 adjacent to each other in the specific direction (width direction in particular), and a gap 21b is formed between at least two sets of second battery modules 21 adjacent to each other in the direction (longitudinal direction in particular) substantially orthogonal to the specific direction. The multiple second battery modules 21 are arranged so as to connect all of the gaps 21a, 21b in the second battery area 10b.

### "Details of blower of cooling device"

Referring to Figures 3 to 6, specifically, the blower 30 of the cooling device 12 can be configured in the following manner. As illustrated particularly in Figure 5, the blower 30 of the cooling device 12 is fixed to the placement portion 80 with its bottom surface 30a directly in contact with the placement portion 80. However, the blower may be fixed to a base on the placement portion with its bottom surface in contact with the base.

As illustrated in Figures 3 to 6, the connection portion 31 of the blower 30 is connected to the upstream end portion 42 of the first duct 40. The blower 30 also has a blower body 32. The blower body 32 has a drive source 33 of the blower 30. The drive source 33 may be a fan 33 capable of rotating so as to send air from the blower body 32 toward the connection portion 31.

As illustrated particularly in Figure 3, the center of rotation of the drive source 33 may be substantially the same as a horizontal center 32a of the blower body 32. The rotation of the drive source 33 can generate a swirling airflow about the center of rotation in the blower body 32. Such swirling air is discharged from the air outlet 31a of the connection portion 31 of the blower 30.

The swirling direction of the drive source 33 is clockwise in plan view, and in this case, the swirling airflow is clockwise in plan view. However, the swirling direction of the drive source may be anticlockwise in plan view. In this case, the swirling airflow is anticlockwise in plan view, and the location of the electric device relative to the blower in the specific direction (width direction in particular) is opposite to that in the case of clockwise swirling.

The connection portion 31 of the blower 30 extends in a direction corresponding to the flow direction of the swirling airflow generated in the blower body 32. An extended axis 30b extending in the extension direction of the connection portion 31 is tilted clockwise by a predetermined tilt angle θ from a reference axis 30c passing through the center 32a of the blower body 32 and extending in the specific direction (width direction in particular). The tilt angle θ may be an acute angle. However, the tilt angle is not limited to an acute angle.

The connection portion 31 of the blower 30 is disposed on the electric device 15 side of the center 32a of the blower body 32. Furthermore, the connection portion 31 may be disposed in a space between the blower 30 and the electric device 15. The connection portion 31 extends while tilting so as to approach the electric device 15 from the blower body 32 toward the upstream end portion 42 of the first duct 40.

### "Details of duct assembly of cooling device"

Referring to Figures 3 to 7, specifically, the duct assembly 12a of the cooling device 12 can be configured in the following manner. As illustrated in Figures 3 and 4, in the duct assembly 12a of the cooling device 12, the entire upstream end portion 42 of the first duct 40 is disposed so as to overlap the blower 30 and the electric device 15 in the direction (longitudinal direction in particular) substantially orthogonal to the specific direction in plan view. The upstream end portion 42 of the first duct 40 extends in substantially the same direction as the connection portion 31 of the blower 30.

As illustrated particularly in Figure 5, the upstream end portion 42 of the first duct 40 and top walls 42a, 43a and bottom walls 42b, 43b of the tilted portion 43 may be formed substantially parallel to a later-described imaginary plane P (indicated by imaginary line in Figure 5). Both a top wall 41a and a bottom wall 41b of the downstream end portion 41 of the first duct 40 are tilted with respect to the imaginary plane P. Specifically, each of the top wall 41a and the bottom wall 41b is tilted so as to approach the tilted portion 43 from lower to upper parts thereof. However, it is also conceivable to make only one of the top wall and bottom wall of the downstream end portion tilt with respect to the imaginary plane. Furthermore, it is also conceivable to form both the top wall and bottom wall of the downstream end portion substantially parallel to the imaginary plane.

The tilted portion 43 of the first duct 40 passes through a space between the blower 30 and the electric device 15. The aforementioned through hole 40b is formed in the bottom wall 43b of the tilted portion 43 of the first duct 40. The through hole 40b of the first duct 40 is formed so as to be aligned with the through hole 80a of the placement portion 80. The through holes 40b, 80a of the first duct 40 and the placement portion 80 are disposed so as to be aligned with an intersection of the gap 20a formed between the first battery modules 20 adjacent to each other in the specific direction (width direction in particular) and the gap 20b formed between the first battery modules 20 adjacent to each other in the direction (longitudinal direction in particular) substantially orthogonal to the specific direction in plan view.

As illustrated in Figures 5 to 7, the duct assembly 12a has a guide duct 70 configured to guide air having entered the through hole 40b from the first duct 40 to the gaps 20a, 20b. The guide duct 70 is formed so as to extend along the vertical direction.

As illustrated particularly in Figure 5, the guide duct 70 has an inlet 70a located at the upper end thereof. The air having entered the through hole 40b from the first duct 40 flows into the internal space of the guide duct 70 from the inlet 70a. The inlet 70a of the guide duct 70 is disposed so as to be aligned with the through holes 40b, 80a of the first duct 40 and the placement portion 80 in plan view. The through hole 40b of the first duct 40, the through hole 80a of the placement portion 80, and the inlet 70a of the guide duct 70 are connected so as to be continuous in the vertical direction.

The guide duct 70 has two outlets 70b for allowing the air having flowed into the internal space of the guide duct 70 from its inlet 70a to flow into the gaps 20a, 20b. The two outlets 70b open to both sides in the specific direction (width direction in particular) in the gap 20b formed between the first battery modules 20 adjacent to each other in the direction (longitudinal direction in particular) substantially orthogonal to the specific direction. However, instead of this gap, or in addition to this gap, the guide duct may have two inlets open to both sides in the direction (longitudinal direction in particular) substantially orthogonal to the specific direction in a gap formed between first battery modules adjacent to each other in the specific direction (width direction in particular).

The intersecting connection duct 50 has an end wall 51 spaced apart from the downstream end portion 41 so as to receive air flowing in from the downstream end portion 41 of the first duct 40 and bend this airflow toward one horizontal direction. The intersecting connection duct 50 has an upper tilted wall 52 adjacent to and above the end wall 51. The upper tilted wall 52 is tilted so as to approach the downstream end portion 41 of the first duct 40 from lower to upper parts thereof.

A bottom wall 53 of the intersecting connection duct 50 is in contact with the placement portion 80 in the vertical direction. However, the bottom wall of the intersecting connection duct may be spaced apart from the placement portion in the vertical direction. As illustrated in Figures 3 to 5, the intersecting connection duct 50 has a joining portion 54 joined to the placement portion 80. The joining portion 54 is located opposite to the downstream end portion 41 with respect to the end wall 51, in the flow direction of air flowing into the intersecting connection duct 50 from the downstream end portion 41 of the first duct 40 in plan view.

As illustrated particularly in Figure 4, the end wall 51 and the upper tilted wall 52 extend in the specific direction described above (width direction in particular) in plan view. As illustrated particularly in Figure 5, the end wall 51 of the intersecting connection duct 50 rises along the vertical direction. The bottom wall 53 of the intersecting connection duct 50 is formed along the placement portion 80. The bottom wall 53 is disposed so as to substantially coincide with the bottom surface 30a of the blower 30 in the vertical direction. However, the bottom wall of the intersecting connection duct may be disposed below the bottom surface of the blower. The bottom wall of the intersecting connection duct may be disposed above the bottom surface of the blower.

A tilt angle α of the upper tilted wall 52 with respect to the imaginary plane P is greater than a tilt angle β, γ of each of the top wall 41a and the bottom wall 41b of the downstream end portion 41 of the first duct 40 with respect to the imaginary plane P. However, the tilt angle of the upper tilted wall with respect to the imaginary plane may be formed to be greater than the tilt angle of only the top wall or the bottom wall of the downstream end portion of the first duct with respect to the imaginary plane. The tilt angle of the upper tilted wall with respect to the imaginary plane may be formed to be less than the tilt angle of each of the top wall and the bottom wall of the downstream end portion of the first duct with respect to the imaginary plane.

As illustrated in Figures 3 to 5, the joining portion 54 is formed so as to protrude from the bottom wall 53 of the intersecting connection duct 50. The joining portion 54 protrudes in substantially the same direction as the extension direction of the downstream end portion 41 of the first duct 40 in plan view. The joining portion 54 is integrated with the intersecting connection duct 50. The joining portion 54 is formed along the placement portion 80.

The joining portion 54 is joined to the placement portion 80 by being fastened with fastening means such as a bolt and a nut. However, the joining portion does not necessarily have to be joined to the placement portion by fastening. For example, the joining portion may be joined to the placement portion by welding or by other methods.

Referring to Figures 3 to 7, the second duct body 61 has an upstream end portion 61a connected to the intersecting connection duct 50 so as to allow air having been deflected in the intersecting connection duct 50 to flow into the second duct body 61. The upstream end portion 61a of the second duct body 61 is spaced apart from the placement portion 80 in the vertical direction.

In a case in which the second duct 60 has two second duct bodies 61, one upstream end portion 61a of the two second duct bodies 61 is connected to one end of the intersecting connection duct 50 in the specific direction (width direction in particular). The other upstream end portion 61a of the two second duct bodies 61 is connected to the other end of the intersecting connection duct 50 in the specific direction (width direction in particular).

However, the second duct may have one, three, or more second duct bodies. In a case in which the second duct has one second duct body, an upstream end portion of the second duct body may be connected to one end of the intersecting connection duct in the specific direction (width direction in particular), and the other end of the intersecting connection duct in the specific direction (width direction in particular) may be closed. In a case in which the second duct has three or more second duct bodies, the upstream end portions of one or more second duct bodies may be connected to one end of the intersecting connection duct in the specific direction (width direction in particular), and the upstream end portions of two or more second duct bodies may be connected to the other end of the intersecting connection duct in the specific direction (width direction in particular).

As illustrated in Figure 5, each second duct body 61 extends in the specific direction (width direction in particular). Each second duct body 61 has an upper tilted wall 61b tilted in a substantially similar manner as the upper tilted wall 52 of the intersecting connection duct 50. The upper tilted wall 61b of each second duct body 61 extends in the specific direction (width direction in particular) in a substantially similar manner as the upper tilted wall 52 of the intersecting connection duct 50. A bottom wall 61c of each second duct body 61 is disposed at the upper end of the end wall 51 of the intersecting connection duct 50 in the vertical direction.

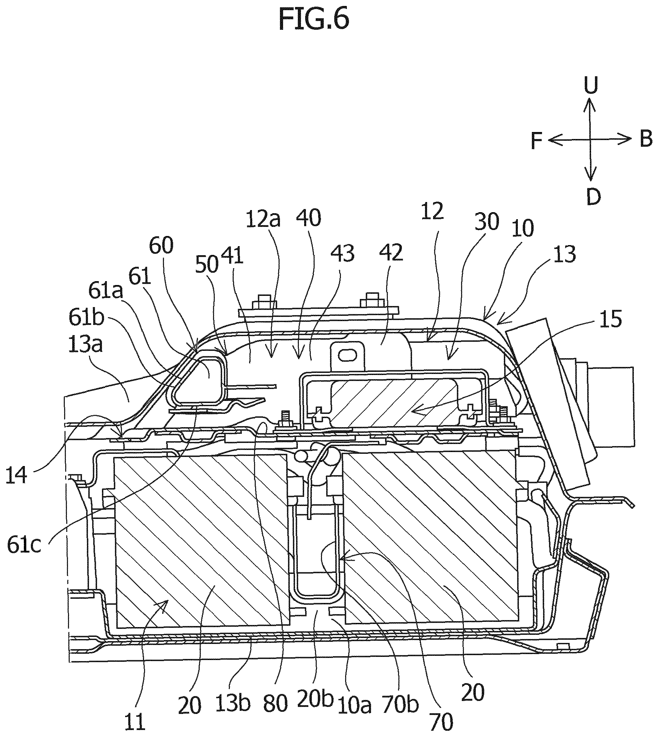

As illustrated particularly in Figures 3 and 4, the distance between the tilted portion 43 of the first duct 40 and the electric device 15 in the specific direction (width direction in particular) is less than the distance between the second duct body 61 and the electric device 15 in the direction (longitudinal direction in particular) substantially orthogonal to the specific direction. As illustrated in Figure 6, the upper end of the first duct 40 and the upper end of the second duct body 61 are located above the upper end of the electric device 15.

The duct assembly 12a of the cooling device 12 has two distribution ducts 71 that can send air passing through the two second duct bodies 61 to the gaps 21a, 21b of the multiple second battery modules 21. The two distribution ducts 71 are connected to the two second duct bodies 61, respectively.

The two distribution ducts 71 are disposed along the direction (longitudinal direction in particular) substantially orthogonal to the specific direction. The two distribution ducts 71 are disposed on both sides of the second battery area 10b in the specific direction (width direction in particular). Upstream end portions 71a in the flow direction of the two distribution ducts 71 are respectively connected to downstream end portions 61d in the flow direction of the two second duct bodies 61.

A downstream end portion 71b in the flow direction of each distribution duct 71 is disposed at an intersection of the gap 21a formed between the second battery modules 21 adjacent to each other in the specific direction (width direction in particular) and the gap 21b formed between the second battery modules 21 adjacent to each other in the direction (longitudinal direction in particular) substantially orthogonal to the specific direction in plan view. Outlets 71c open to both sides in the direction (longitudinal direction in particular) substantially orthogonal to the specific direction are formed in the downstream end portion 71b of each distribution duct 71. At least one outlet 71d open to at least one side in the specific direction (width direction in particular) may be formed in the downstream end portion 71b of each distribution duct 71.

In such a cooling device 12, the air sent to the first duct 40 from the blower 30 is distributed into a portion sent to the gaps 20a, 20b of the first battery modules 20 through the through hole 40b of the first duct 40 and the through hole 80a of the placement portion 80 and then the guide duct 70, and a portion sent to the gaps 21a, 21b of the second battery modules 21 through the intersecting connection duct 50 and the second duct 60 and then the distribution duct 71.

Each such first duct 40, intersecting connection duct 50, second duct body 61 of second duct 60, guide duct 70, and distribution duct 71 (hereinafter collectively referred to as "the ducts" as necessary) is formed using resin. In this case, each of the ducts may be a resin-molded part. However, at least one of the ducts may be formed by using metal. In this case, at least one of the ducts may be a press-formed part including metal plate materials.

### "Example of cooling method of vehicle battery pack"

Here, an example of a cooling method of a vehicle battery pack 10 according to the present embodiment will be described. In the battery pack 10, air is circulated in the battery case 13 by the blower 30 and the duct assembly 12a of the cooling device 12, and the circulating air can exchange heat with the battery modules 20, 21, to cool the battery modules 20, 21.

The air heated by heat exchange with the battery modules 20, 21 is cooled by exchanging heat with the battery case 13 when flowing along the battery case 13. In other words, the heated air is cooled by dissipating air to the outside of the battery pack 10 through the battery case 13. The air cooled in this manner can cool the battery modules 20, 21 again. In this case, it is preferable that the battery case 13 be formed to have high thermal conductivity. For example, the battery case 13 is preferably formed by using metal, as described above.

More specifically, in the battery pack 10, air can be circulated in the following manner. Air is sent to the first duct 40 from the blower 30 and then flows so as to be split into the first and second battery areas 10a, 10b in the first duct 40. The air having flowed to the first and second battery areas 10a, 10b cools the first and second battery modules 20, 21 of the first and second battery areas 10a, 10b, respectively.

The air heated by cooling the first and second battery modules 20, 21 flows along the battery case 13 around the first and second battery areas 10a, 10b. At this time, the air is cooled by exchanging heat with the battery case 13, and then the air returns to the blower 30 again.

As described above, the vehicle battery pack 10 according to the present embodiment is the vehicle battery pack 10 mounted on a vehicle including: multiple battery modules 20, 21; the cooling device 12 configured to cool the multiple battery modules 20, 21; and the battery case 13 that accommodates the multiple battery modules 20, 21 and the cooling device 12, in which: the cooling device 12 has the blower 30 as a supply source of air sent to cool the multiple battery modules 20, 21, and the duct assembly 12a having an internal space formed so as to allow passage of air from the blower 30; the duct assembly 12a includes the first duct 40 connected to the blower 30, the intersecting connection duct 50 connected to the first duct 40, and the second duct 60 connected to the intersecting connection duct 50; the first duct 40 and the intersecting connection duct 50 are disposed in horizontal directions that are directions extending in the longitudinal direction and width direction of the vehicle; the second duct 60 has multiple second duct bodies 61 extending from the intersecting connection duct 50 so as to split air having passed the intersecting connection duct 50 from the first duct 40; the multiple battery modules 20, 21 include the multiple first battery modules 20 disposed in the area 10a located below the first duct 40 so as to face the first duct 40 in the vertical direction, and the multiple second battery modules 21 disposed so as to be shifted in at least one of the horizontal directions from the multiple first battery modules 20; the first duct 40 has the through hole 40b that penetrates the bottom wall 40a of the first duct 40 so as to connect the gaps 20a, 20b between at least one set of adjacent first battery modules 20 with the first duct 40 to supply air to the gaps 20a, 20b from the first duct 40; and the multiple second duct bodies 61 are configured to send air toward the multiple second battery modules 21 through the multiple second duct bodies 61.

With the battery pack 10 described above, air can be supplied to the multiple first battery modules 20 through the through hole 40b of the first duct 40 from the blower 30, and air can be supplied to the multiple second battery modules 21 through the first and second ducts 40, 60 from the blower 30. Hence, cool air can be sent efficiently to the multiple first battery modules 20 located below the first duct 40 and the multiple second battery modules 21 disposed so as to be shifted in at least one of the horizontal directions from the multiple first battery modules 20. As a result, the multiple battery modules 20, 21 can be cooled efficiently.

In the vehicle battery pack 10 according to the present embodiment, the cross section of the internal space of the second duct body 61 is smaller than the cross section of the internal space of the first duct 40. In the vehicle battery pack 10 according to the present embodiment, the cross section of the internal space of the first duct 40 decreases as the cross section approaches the intersecting connection duct 50 in a direction from the blower 30 toward the intersecting connection duct 50.

With the battery pack 10 described above, it is possible to prevent deterioration in the flow speed of air from the first duct 40 on the upstream side, through the intersecting connection duct 50 in the middle, and toward the second duct body 61 on the downstream side. Furthermore, in the first duct 40, too, it is possible to prevent deterioration in the flow speed of air from the upstream side of the first duct 40 toward the downstream side of the first duct 40.

Here, taking into account that a higher flow speed of air increases the heat transfer coefficient of air, with the battery pack 10 according to the present embodiment, the air sent to the multiple second battery modules 21 from the first duct 40 through the second duct body 61 can take heat from the multiple second battery modules 21 efficiently. Hence, the multiple second battery modules 21 can be cooled efficiently.

In the vehicle battery pack 10 according to the present embodiment, the first duct 40 has the downstream end portion 41 in the flow direction of air passing therethrough, and the downstream end portion 41 of the first duct 40 is connected to the intersecting connection duct 50 and is formed such that the width of the downstream end portion 41 increases toward the intersecting connection duct 50 in a direction from the blower 30 toward the intersecting connection duct 50 in plan view.

With the battery pack 10 described above, when air is distributed to the multiple second duct bodies 61 from the first duct 40 through the intersecting connection duct 50, the air can flow smoothly, and frictional loss can be reduced. Hence, it is possible to prevent deterioration in the flow speed of air distributed to the multiple second duct bodies 61 from the first duct 40 through the intersecting connection duct 50.

In the vehicle battery pack 10 according to the present embodiment, the blower 30, the first duct 40, the intersecting connection duct 50, and the second duct 60 are located above the multiple first battery modules 20 so as to face the multiple first battery modules 20 in the vertical direction; the blower 30 has the connection portion 31 connected to the upstream end portion 42 of the first duct 40; the connection portion 31 of the blower 30 has the air outlet 31a open to one of the horizontal directions so as to send air to the internal space of the first duct 40; the second duct 60 is located closer to the front of the vehicle than the blower 30; the downstream end portion 41 of the first duct 40 extends in the longitudinal direction of the vehicle; and the multiple second duct bodies 61 include two second duct bodies 61 extending in one and the other width directions of the vehicle from the intersecting connection duct 50.

With the battery pack 10 described above, the connection portion 31 of the blower 30 having the air outlet 31a is disposed in the vicinity of the through hole 40b of the first duct 40. It is possible to maintain the flow speed of air supplied to the first battery module 20 through the through hole 40b of the first duct 40 to enable efficient cooling of the first battery module 20.

In the vehicle battery pack 10 according to the present embodiment, the connection portion 31 of the blower 30 is disposed so as to be shifted with respect to the downstream end portion 41 of the first duct 40 in the width direction of the vehicle; and the first duct 40 has the tilted portion 43 located between the upstream and downstream end portions 42, 41 in the flow direction thereof, and tilted so as to separate from the blower 30 in the width direction of the vehicle from the back of the vehicle toward the front of the vehicle.

With the battery pack 10 described above, the direction of air sent from the blower 30 to the first duct 40 can be changed smoothly by the tilted portion 43 of the first duct 40, and frictional loss generated when changing the direction of air in the first duct 40 can be reduced. Additionally, the tilted portion 43 can reduce space occupied by the first duct 40. Hence, it is possible to prevent deterioration of flow speed of air passing through the first duct 40. An additional effect is downsizing of the cooling device 12 and therefore downsizing of the battery pack 10.

### [Reference Signs List]

10 ...battery pack, 10a ...area, first battery area, 12 ...cooling device, 12a ...duct assembly,
13 ...battery case
20 ...battery module, first battery module, 20a, 20b ...gap
21 ...battery module, second battery module
30 ...blower, 31 ...connection portion, 31a ...air outlet
40 ...first duct, 40a ...bottom wall, 40b ...through hole, 41 ...downstream end portion,
42 ...upstream end portion, 43 ...tilted portion
50 ...intersecting connection duct
60 ...second duct, 61 ...second duct body

## Claims

1. A vehicle battery pack (10) mounted in a vehicle, the vehicle battery pack (10) comprising:
a battery case (13);
a plurality of battery modules (20,21) accommodated in the battery case (13); and
a cooling device (12) accommodated in the battery case (13) and configured to cool the plurality of battery modules (20,21), wherein:
the plurality of battery modules (20,21) include a plurality of first battery modules (20) disposed in a first battery area (10a) and a plurality of second battery modules (21) disposed in a second battery area (10b), the plurality of second battery modules (21) are disposed so as to be shifted in at least one of horizontal directions from the plurality of first battery modules (20);
the cooling device (12) has a blower (30) as a supply source of air sent to cool the plurality of battery modules (20,21), and a duct assembly (12a) having an internal space formed so as to allow passage of air from the blower (30);
the duct assembly (12a) includes a first duct (40) connected to the blower (30), an intersecting connection duct (50) connected to the first duct (40), a second duct (60) connected to the intersecting connection duct (50), and two distribution ducts (71) connected to the second duct (60);
the first duct (40) and the intersecting connection duct (50) are disposed in horizontal directions that are directions extending in a longitudinal direction and a width direction of the vehicle;
the plurality of first battery modules (20) are located below the first duct (40) so as to face the first duct (40) in a vertical direction;
the blower (30), the intersecting connection duct (50), and the second duct (60) are located above the plurality of first battery modules (20) so as to face the plurality of first battery modules (20) in the vertical direction;
the blower (30) has a connection portion (31) connected to an upstream end portion (42) of the first duct (40) in a flow direction of the first duct (40);
the connection portion (31) of the blower (30) has an air outlet (31a) open in one of the horizontal directions so as to send air into the internal space of the first duct (40) ;
the vehicle battery pack (10) has a support base (14) configured to support the cooling device (12) from below;
the support base (14) has a placement portion (80) on which the blower (30), the first duct (40), the intersecting connection duct (50), and the second duct (60) are placed;
a downstream end portion (41) of the first duct (40) extends in the longitudinal direction of the vehicle;
the intersecting connection duct (50) has an end wall (51) spaced apart from the downstream end portion (41) so as to receive air flowing in from the downstream end portion (41) of the first duct (40) and bend this air flow toward one horizontal direction;
the second duct (60) has two second duct bodies (61) extending from the intersecting connection duct (50) so as to split air having passed the intersecting connection duct (50) from the first duct (40);
the two distribution ducts (71) are connected to the two second duct bodies (61), respectively, and can send air passing through the two second duct bodies (61) to gaps (21a,21b) of the plurality of second battery modules (21);
one of the two distribution ducts (71) is disposed on one side of the second battery area (10b) in the width direction of the vehicle, the other of the two distribution ducts (71) is disposed on the other side of the second battery area (10b) in the width direction of the vehicle;
a downstream end portion (71b) in the flow direction of each distribution duct (71) is disposed at an intersection of a gap (21a) of said gaps (21a,21b) of the plurality of second battery modules (21), formed between the second battery modules (21) adjacent to each other in the width direction, and a gap (21b) of said gaps (21a,21b) of the plurality of second battery modules (21), formed between the second battery modules (21) adjacent to each other in the longitudinal direction; and
the first duct (40) has a through hole (40b) that penetrates a bottom wall (43b) of the first duct (40) so as to connect a gap (20b) between at least one set of adjacent first battery modules (20) with the first duct (40) via a through hole (80a) of the placement portion to supply air to the gap (20b) from the first duct (40).

2. The vehicle battery pack (10) according to claim 1, wherein:
the second duct (60) is located closer to the front of the vehicle than the blower (30).

3. The vehicle battery pack (10) according to claim 1, wherein
the connection portion (31) of the blower (30) is disposed so as to be shifted with respect to the downstream end portion (41) of the first duct (40) in the width direction of the vehicle; and
the first duct (40) has a tilted portion (43) located between the upstream and downstream end portions (42,41) in the flow direction thereof, and tilted so as to separate from the blower (30) in the width direction of the vehicle from the back of the vehicle toward the front of the vehicle.

4. The vehicle battery pack (10) according to claim 1, 2 or 3, wherein
the battery pack (10) is disposed below a floor panel (2) of a vehicle body (1) of the vehicle.

## Patentansprüche

1. Ein Fahrzeug-Batteriepack (10), das in einem Fahrzeug montiert ist, wobei das Fahrzeug-Batteriepack (10) umfasst:
ein Batteriegehäuse (13);
eine Vielzahl von Batteriemodulen (20, 21), die im Batteriegehäuse (13) untergebracht sind; und
eine Kühlvorrichtung (12), die im Batteriegehäuse (13) untergebracht und zum Kühlen der Vielzahl von Batteriemodulen (20, 21) konfiguriert ist, wobei:
die Vielzahl von Batteriemodulen (20, 21) eine Vielzahl von ersten Batteriemodulen (20), die in einem ersten Batteriebereich (10a) angeordnet sind, und eine Vielzahl von zweiten Batteriemodulen (21), die in einem zweiten Batteriebereich (10b) angeordnet sind, einschließt, wobei die Vielzahl von zweiten Batteriemodulen (21) so angeordnet ist, dass sie in mindestens einer von horizontalen Richtungen gegenüber der Vielzahl von ersten Batteriemodulen (20) verschoben ist;
die Kühlvorrichtung (12) ein Gebläse (30) als Zufuhrquelle für Luft, die zum Kühlen der Vielzahl von Batteriemodulen (20, 21) gesendet wird, und eine Kanalanordnung (12a) aufweist, die einen Innenraum hat, der so ausgebildet ist, dass er einen Durchgang von Luft vom Gebläse (30) ermöglicht;
die Kanalanordnung (12a) einen ersten Kanal (40), der mit dem Gebläse (30) verbunden ist, einen kreuzenden Verbindungskanal (50), der mit dem ersten Kanal (40) verbunden ist, einen zweiten Kanal (60), der mit dem kreuzenden Verbindungskanal (50) verbunden ist, und zwei Verteilungskanäle (71), die mit dem zweiten Kanal (60) verbunden sind, einschließt;
der erste Kanal (40) und der kreuzende Verbindungskanal (50) in horizontalen Richtungen angeordnet sind, die Richtungen sind, die sich in einer Längsrichtung und einer Breitenrichtung des Fahrzeugs erstrecken;
die Vielzahl von ersten Batteriemodulen (20) unterhalb des ersten Kanals (40) so angeordnet ist, dass sie dem ersten Kanal (40) in einer vertikalen Richtung zugewandt ist;
das Gebläse (30), der kreuzende Verbindungskanal (50) und der zweite Kanal (60) oberhalb der Vielzahl von ersten Batteriemodulen (20) so angeordnet sind, dass sie der Vielzahl von ersten Batteriemodulen (20) in der vertikalen Richtung zugewandt sind;
das Gebläse (30) einen Verbindungsabschnitt (31) aufweist, der mit einem stromaufwärtigen Endabschnitt (42) des ersten Kanals (40) in einer Strömungsrichtung des ersten Kanals (40) verbunden ist;
der Verbindungsabschnitt (31) des Gebläses (30) einen Luftauslass (31a) aufweist, der in eine der horizontalen Richtungen offen ist, um Luft in den Innenraum des ersten Kanals (40) zu leiten;
das Fahrzeug-Batteriepack (10) eine Trägerbasis (14) aufweist, die konfiguriert ist, um die Kühlvorrichtung (12) von unten zu stützen;
die Trägerbasis (14) einen Platzierungsabschnitt (80) aufweist, auf dem das Gebläse (30), der erste Kanal (40), der kreuzende Verbindungskanal (50) und der zweite Kanal (60) platziert sind;
ein stromabwärtiger Endabschnitt (41) des ersten Kanals (40) sich in der Längsrichtung des Fahrzeugs erstreckt;
der kreuzende Verbindungskanal (50) eine Stirnwand (51) aufweist, die vom stromabwärtigen Endabschnitt (41) beabstandet ist, um vom stromabwärtigen Endabschnitt (41) des ersten Kanals (40) einströmende Luft aufzunehmen und diesen Luftstrom in eine horizontale Richtung umzulenken;
der zweite Kanal (60) zwei zweite Kanalkörper (61) aufweist, die sich vom kreuzenden Verbindungskanal (50) erstrecken, um Luft, die den kreuzenden Verbindungskanal (50) vom ersten Kanal (40) durchströmt hat, aufzuteilen;
die beiden Verteilungskanäle (71) jeweils mit den beiden zweiten Kanalkörpern (61) verbunden sind und Luft, die durch die beiden zweiten Kanalkörper (61) strömt, zu Spalten (21a, 21b) der Vielzahl von zweiten Batteriemodulen (21) leiten können;
einer der beiden Verteilungskanäle (71) auf einer Seite des zweiten Batteriebereichs (10b) in der Breitenrichtung des Fahrzeugs angeordnet ist, der andere der beiden Verteilungskanäle (71) auf der anderen Seite des zweiten Batteriebereichs (10b) in der Breitenrichtung des Fahrzeugs angeordnet ist;
ein stromabwärtiger Endabschnitt (71b) in der Strömungsrichtung jedes Verteilungskanals (71) an einem Schnittpunkt eines Spalts (21a) der Spalten (21a, 21b) der Vielzahl von zweiten Batteriemodulen (21), die zwischen den zweiten Batteriemodulen (21) gebildet sind, die in der Breitenrichtung aneinander angrenzen, und eines Spalts (21b) der Spalten (21a, 21b) der Vielzahl von zweiten Batteriemodulen (21), die zwischen den zweiten Batteriemodulen (21) gebildet sind, die in der Längsrichtung aneinander angrenzen, angeordnet ist; und
der erste Kanal (40) ein Durchgangsloch (40b) aufweist, das eine Bodenwand (43b) des ersten Kanals (40) durchdringt, um einen Spalt (20b) zwischen mindestens einem Satz benachbarter erster Batteriemodule (20) mit dem ersten Kanal (40) über ein Durchgangsloch (80a) des Platzierungsabschnitts zu verbinden, um dem Spalt (20b) Luft vom ersten Kanal (40) zuzuführen.

2. Das Fahrzeug-Batteriepack (10) nach Anspruch 1, wobei:
der zweite Kanal (60) näher an der Vorderseite des Fahrzeugs angeordnet ist als das Gebläse (30).

3. Das Fahrzeug-Batteriepack (10) nach Anspruch 1, wobei:
der Verbindungsabschnitt (31) des Gebläses (30) so angeordnet ist, dass er in Bezug auf den stromabwärtigen Endabschnitt (41) des ersten Kanals (40) in der Breitenrichtung des Fahrzeugs verschoben ist; und
der erste Kanal (40) einen geneigten Abschnitt (43) aufweist, der zwischen den stromaufwärtigen und stromabwärtigen Endabschnitten (42, 41) in dessen Strömungsrichtung angeordnet ist und so geneigt ist, dass er sich vom Gebläse (30) in der Breitenrichtung des Fahrzeugs von der Rückseite des Fahrzeugs zur Vorderseite des Fahrzeugs hin trennt.

4. Das Fahrzeug-Batteriepack (10) nach Anspruch 1, 2 oder 3, wobei:
das Batteriepack (10) unter einer Bodenplatte (2) einer Fahrzeugkarosserie (1) des Fahrzeugs angeordnet ist.

## Revendications

1. Un bloc-batterie de véhicule (10) monté dans un véhicule, le bloc-batterie de véhicule (10) comprenant :
un boîtier de batterie (13) ;
une pluralité de modules de batterie (20, 21) logés dans le boîtier de batterie (13) ; et
un dispositif de refroidissement (12) logé dans le boîtier de batterie (13) et configuré pour refroidir la pluralité de modules de batterie (20, 21), dans lequel :
la pluralité de modules de batterie (20, 21) inclut une pluralité de premiers modules de batterie (20) disposés dans une première zone de batterie (10a) et une pluralité de seconds modules de batterie (21) disposés dans une seconde zone de batterie (10b), la pluralité de seconds modules de batterie (21) étant disposée de manière à être décalée dans au moins une des directions horizontales par rapport à la pluralité de premiers modules de batterie (20) ;
le dispositif de refroidissement (12) comporte une soufflante (30) en tant que source d'alimentation en air envoyé pour refroidir la pluralité de modules de batterie (20, 21), et un ensemble de conduits (12a) ayant un espace interne formé de manière à permettre le passage de l'air depuis la soufflante (30) ;
l'ensemble de conduits (12a) inclut un premier conduit (40) raccordé à la soufflante (30), un conduit de raccordement d'intersection (50) raccordé au premier conduit (40), un second conduit (60) raccordé au conduit de raccordement d'intersection (50), et deux conduits de distribution (71) raccordés au second conduit (60) ;
le premier conduit (40) et le conduit de raccordement d'intersection (50) sont disposés dans des directions horizontales qui sont des directions s'étendant dans une direction longitudinale et une direction de la largeur du véhicule ;
la pluralité de premiers modules de batterie (20) est située en dessous du premier conduit (40) de manière à faire face au premier conduit (40) dans une direction verticale ;
la soufflante (30), le conduit de raccordement d'intersection (50), et le second conduit (60) sont situés au-dessus de la pluralité de premiers modules de batterie (20) de manière à faire face à la pluralité de premiers modules de batterie (20) dans la direction verticale ;
la soufflante (30) comporte une partie de raccordement (31) raccordée à une partie d'extrémité amont (42) du premier conduit (40) dans une direction d'écoulement du premier conduit (40) ;
la partie de raccordement (31) de la soufflante (30) comporte une sortie d'air (31a) ouverte dans l'une des directions horizontales de manière à envoyer de l'air dans l'espace interne du premier conduit (40) ;
le bloc-batterie de véhicule (10) comporte une base de support (14) configurée pour supporter le dispositif de refroidissement (12) par le dessous ;
la base de support (14) comporte une partie de placement (80) sur laquelle la soufflante (30), le premier conduit (40), le conduit de raccordement d'intersection (50), et le second conduit (60) sont placés ;
une partie d'extrémité aval (41) du premier conduit (40) s'étend dans la direction longitudinale du véhicule ;
le conduit de raccordement d'intersection (50) comporte une paroi d'extrémité (51) espacée de la partie d'extrémité aval (41) de manière à recevoir l'air s'écoulant depuis la partie d'extrémité aval (41) du premier conduit (40) et à dévier ce flux d'air vers une direction horizontale ;
le second conduit (60) comporte deux corps de second conduit (61) s'étendant depuis le conduit de raccordement d'intersection (50) de manière à diviser l'air ayant traversé le conduit de raccordement d'intersection (50) depuis le premier conduit (40) ;
les deux conduits de distribution (71) sont raccordés aux deux corps de second conduit (61), respectivement, et peuvent envoyer de l'air passant à travers les deux corps de second conduit (61) vers des interstices (21a, 21b) de la pluralité de seconds modules de batterie (21) ;
l'un des deux conduits de distribution (71) est disposé sur un côté de la seconde zone de batterie (10b) dans la direction de la largeur du véhicule, l'autre des deux conduits de distribution (71) est disposé sur l'autre côté de la seconde zone de batterie (10b) dans la direction de la largeur du véhicule ;
une partie d'extrémité aval (71b) dans la direction d'écoulement de chaque conduit de distribution (71) est disposée à une intersection d'un interstice (21a) desdits interstices (21a, 21b) de la pluralité de seconds modules de batterie (21), formé entre les seconds modules de batterie (21) adjacents les uns aux autres dans la direction de la largeur, et d'un interstice (21b) desdits interstices (21a, 21b) de la pluralité de seconds modules de batterie (21), formé entre les seconds modules de batterie (21) adjacents les uns aux autres dans la direction longitudinale ;
et le premier conduit (40) comporte un trou traversant (40b) qui pénètre une paroi inférieure (43b) du premier conduit (40) de manière à raccorder un interstice (20b) entre au moins un ensemble de premiers modules de batterie (20) adjacents avec le premier conduit (40) via un trou traversant (80a) de la partie de placement pour fournir de l'air à l'interstice (20b) depuis le premier conduit (40).

2. Le bloc-batterie de véhicule (10) selon la revendication 1, dans lequel :
le second conduit (60) est situé plus près de l'avant du véhicule que la soufflante (30).

3. Le bloc-batterie de véhicule (10) selon la revendication 1, dans lequel :
la partie de raccordement (31) de la soufflante (30) est disposée de manière à être décalée par rapport à la partie d'extrémité aval (41) du premier conduit (40) dans la direction de la largeur du véhicule ; et
le premier conduit (40) comporte une partie inclinée (43) située entre les parties d'extrémité amont et aval (42, 41) dans sa direction d'écoulement, et inclinée de manière à s'éloigner de la soufflante (30) dans la direction de la largeur du véhicule, depuis l'arrière du véhicule vers l'avant du véhicule.

4. Le bloc-batterie de véhicule (10) selon la revendication 1, 2 ou 3, dans lequel :
le bloc-batterie (10) est disposé en dessous d'un panneau de plancher (2) d'une caisse de véhicule (1) du véhicule.
